# EUROPEAN PATENT SPECIFICATION

(11) **EP 4 163 194 B1**
(45) Date of publication and mention of the grant of the patent: **07.08.2024**
(21) Application number: 20938847.9
(22) Date of filing: 05.06.2020
(51) Int. Cl.: B62D 35/00, B62D 37/02

(54) **AUTOMOBILE TAIL WING CONTROL METHOD, APPARATUS AND AUTOMOBILE**
VERFAHREN, VORRICHTUNG UND AUTOMOBIL ZUR HECKFLÜGELSTEUERUNG
PROCÉDÉ DE COMMANDE D'AILERON ARRIÈRE D'AUTOMOBILE, APPAREIL ET AUTOMOBILE

(43) Date of publication of application: 12.04.2023
(73) Proprietor: Wuhan Lotus Cars Co., Ltd., Wuhan, Hubei 430056 (CN)
(72) Inventor: LIU, Hongyong, Hangzhou Bay New District Ningbo, Zhejiang 315336 (CN); XIA, Long, Hangzhou Bay New District Ningbo, Zhejiang 315336 (CN)
(74) Representative: Ziebig Hengelhaupt Intellectual Property Attorneys Patentanwaltskanzlei PartGmbB
(86) International application number: PCT/CN2020/094775
(87) International publication number: WO 2021/243722

(56) References cited:
- CN-A- 104 176 021
- CN-A- 104 228 983
- CN-A- 104 228 983
- CN-A- 110 104 077
- CN-A- 110 104 077
- CN-U- 207 257 812
- CN-U- 210 338 088
- DE-A1- 102013 021 767
- DE-U1- 202013 005 386
- US-A1- 2018 001 941
- US-A1- 2019 002 039
- US-A1- 2019 233 023
- US-B1- 8 702 152

## Description

### FIELD OF THE INVENTION

This application relates to the technical field of vehicle control, and in particular to a vehicle rear spoiler control method and apparatus and a vehicle.

### BACKGROUND OF THE INVENTION

A vehicle rear spoiler is a part of an aerodynamic suit of a vehicle, is generally mounted at the tail of the vehicle and has a major function of making air resistance form a downward pressure in the vehicle driving process, so as to weaken a lift force at the tail of the vehicle, effectively control an air flow down force to make a wind resistance coefficient correspondingly reduced and improve the stability of the vehicle during high-speed driving. With the popularization and the application of the vehicle rear spoiler for the vehicles, the safety problems in the opening and closing process of the vehicle rear spoiler also require to be urgently solved.

Current common safety problems are mainly as follows: in the opening and closing process of the vehicle rear spoiler, conditions that a person is clamped, foreign matters are collided and the like may occur, causing personal injuries, faults of the vehicle rear spoiler own or the like. In the prior art, in order to solve the above safety problems in the use process of the vehicle rear spoiler, two solutions are mainly employed: I. a rear spoiler switching key-press is arranged on a central control of a cab to be used for controlling movement of the rear spoiler, for example, the rear spoiler may be closed by long pressing the key-press, and once a finger leaves the key-press, the rear spoiler stops movement. When hazardous events such as person being clamped happen and are noted by an operator, such design may allow the operator to stop operation (for example, closing) of the rear spoiler through the key-press. II. In the operation (for example, closing) process of the rear spoiler, by detecting a motor stall current, whether the rear spoiler clamps foreign matters is judged; and if motor stalling is detected in the operation process of the rear spoiler, the rear spoiler can automatically return to a last position.

DE 20 2013 005386 U1 discloses a side spoiler arrangement for a motor vehicle, which includes at least one spoiler element arranged along the side edge of a rear windshield, and at least one clamping sensor coupled to a drive of a tailgate. The clamping sensor is fixed on the spoiler element, and the drive interacts with what is detected by the clamping sensor. The clamping sensor is designed to be pressure sensitive and can produce either an electrical signal or measurably change an existing electrical signal at a pressure load in the case of clamping. That signal generation or signal change can be forwarded via appropriate cables to the control device (the drive), so that the control device stops a currently occurring closing process of the tailgate, i.e., the control device stops the operation of the spoiler element.

US 2018/001941 A1 discloses aerodynamic structures for the rear of a cargo body that move between a deployed position and a retracted position. The aerodynamic structures are typically three-sided, with a top panel and opposing side panels that form a partial cavity at the rear of the body. Deployment/Retraction of the device can be performed through automated means of slow speed or collision detection, or through driver activation (remote control).

In some cases, the solution controlling operation of the rear spoiler through a long press can not effectively avoid the safety risks but only transfers the risks to the operator; whether the risks can be avoided completely depends on whether the operator notes that the foreign matters are crammed into the rear spoiler; and automatic clamping prevention cannot be achieved. With regard to the above solution detecting the motor stall current, although automatic clamping prevention may be achieved, a clamping force of a mechanism during motor stalling is large, and there may still be a condition that the person is clamped and injured. Therefore, it needs to provide a more reliable or more effective solution, so as to solve the safety problems of the vehicle rear spoiler in the use process.

### BRIEF DESCRIPTION OF THE INVENTION

This specification provides a vehicle rear spoiler control method and apparatus and a vehicle, which may greatly improve the safety of operation of a rear spoiler.

In one aspect, this specification provides a vehicle rear spoiler control method, including the following steps:
receiving a rear spoiler operation request;
starting an environment perception apparatus of the vehicle, and acquiring environment perception data;
performing obstacle detection in a preset range of a position where the vehicle rear spoiler is located according to the environment perception data; and
controlling operation of the vehicle rear spoiler according to a result of the obstacle detection.

In another aspect, provided is a vehicle rear spoiler control apparatus, including:
a request receiving module configured to receive the rear spoiler operation request;
an environment perception module configured to start the environment perception apparatus of the vehicle and acquire the environment perception data;
an obstacle detection module configured to perform obstacle detection in a preset range of a position where the vehicle rear spoiler is located according to the environment perception data; and
a rear spoiler operation controlling module configured to control operation of the vehicle rear spoiler according to a result of the obstacle detection.

In another aspect, provided is a vehicle, including: an environment perception apparatus, a vehicle rear spoiler and a controller.

The environment perception apparatus is configured to acquire the environment perception data for obstacle detection in the preset range of the position where the vehicle rear spoiler is located.

The controller is configured to control the vehicle rear spoiler based on any one of the vehicle rear spoiler control methods.

In another aspect, provided is a vehicle rear spoiler control apparatus which may include a processor and a memory. The memory stores at least one instruction or at least one program; and the at least one instruction or the at least one program is loaded and executed by the processor to implement the above vehicle rear spoiler control methods provided by the method embodiments.

The vehicle rear spoiler control method and apparatus and the vehicle provided by this specification have the following technical effects that:
in this specification, after the rear spoiler operation request is received, a corresponding rear spoiler operation is not executed directly, but the environment perception data is acquired by using the environment perception apparatus on the vehicle firstly; based on the environment perception data, the obstacle detection is performed in the preset range of the position where the vehicle rear spoiler is located; and then according to a result of the obstacle detection, rear spoiler opening and closing control is conducted, so that the safety problems that a person is clamped, foreign matters are collided and the like caused by direct opening and closing of the rear spoiler are avoided, and the safety of rear spoiler operation is greatly improved.

### BRIEF DESCRIPTION OF THE DRAWINGS

In order to describe the technical solutions and the advantages in the embodiments of this specification or the prior art more clearly, the following briefly introduces the accompanying drawings required for describing the embodiments or the prior art. Apparently, the accompanying drawings in the following description show only some embodiments of this specification, and those of ordinary skill in the art may still derive other drawings from these drawings without any creative efforts.
FIG. 1 is a schematic diagram of an appearance of a vehicle provided by an embodiment of this specification;
FIG. 2 is a structural schematic diagram of a vehicle provided by an embodiment of this specification;
FIG. 3 is a schematic flow chart of a vehicle rear spoiler control method provided by an embodiment of this specification;
FIG. 4 is a schematic flow chart of another vehicle rear spoiler control method provided by an embodiment of this specification;
FIG. 5 is a schematic flow chart of another vehicle rear spoiler control method provided by an embodiment of this specification;
FIG. 6 is a schematic structural diagram of a vehicle rear spoiler control apparatus provided by an embodiment of this specification;
FIG. 7 is a schematic structural diagram of another vehicle rear spoiler control apparatus provided by an embodiment of this specification; and
FIG. 8 is a schematic structural diagram of another vehicle rear spoiler control apparatus provided by an embodiment of this specification.

### DETAILED DESCRIPTION

The technical solutions in the embodiments of this specification are described clearly and completely in the following with reference to accompanying drawings in the embodiments of this specification. The described embodiments are only part rather than all of the embodiments of this specification. The invention is defined only by the appended claims.

It should be noted that the terms "first", "second" and the like in the specification, the claims and the drawings of this specification are used to distinguish between similar objects and not necessarily to describe a specific sequence or order. It should be understood that data so used are interchangeable under appropriate circumstances, such that the embodiments of this specification described herein can be implemented in a sequence other than those illustrated or described herein. In addition, the terms "comprising", and "having" and any variations thereof are intended to cover non-exclusive inclusion. For example, a process, a method, a system, a product or a server including a series of steps or units is not necessarily limited to the explicitly listed steps or units, but may include other steps or units that are not explicitly listed or are inherent to such process, method, product or device.

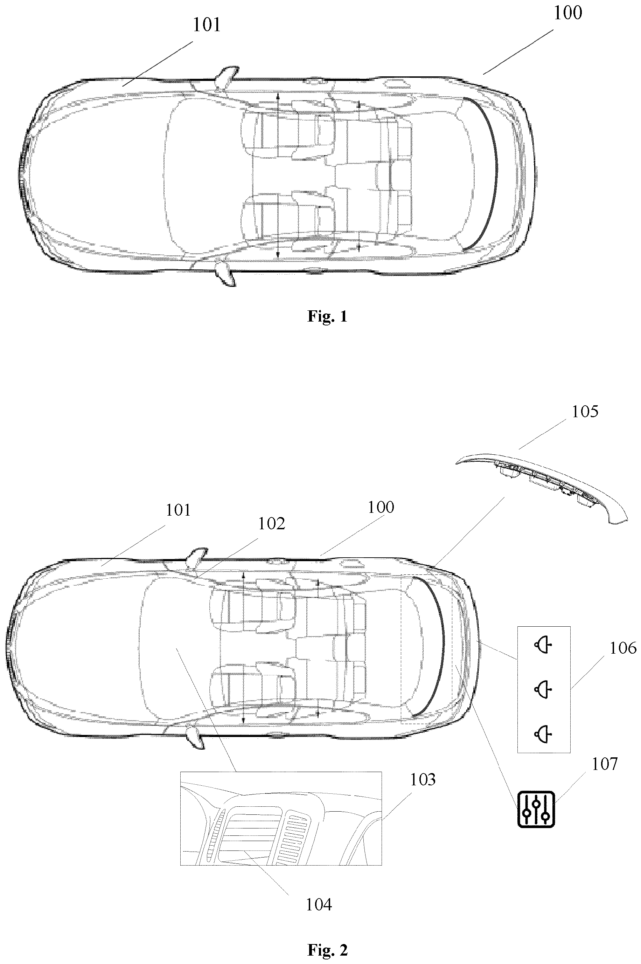

The vehicle rear spoiler control method provided by the embodiments of this specification may be applied to a vehicle. Specifically, in combination with what is shown in FIG. 1 and FIG. 2, an exemplary structure of a vehicle provided by the embodiments of this specification is introduced.

Specifically, the vehicle 100 has a vehicle body 101; the interior of the vehicle body 101 is a vehicle room 102; an instrument board 103 is equipped in the front of the vehicle room 102 and is equipped with a display panel 104. A rear spoiler 105 is equipped at the tail of the outer side of the vehicle body 101; and specifically, the rear spoiler 105 is connected with the vehicle body 101 through a lifting structure.

Further, an environment perception apparatus 106 is further equipped on the outer side of the vehicle body 101. In some embodiments, the environment perception apparatus 106 is an intrinsic or self perception apparatus of the vehicle. Specifically, the environment perception apparatus 106 may be an ultrasonic radar sensor mounted on the vehicle body 101 (for example, an ultrasonic radar sensor in a vehicle reversing radar mounted on a rear bumper), may alternatively be a camera device mounted at the periphery of the vehicle body 101 (for example, a camera device in a vehicle panoramic view system), may alternatively be a camera device mounted at the rear part of the outer side of the vehicle body 101 (for example, a camera device in a vehicle reversing image system) and the like. In some embodiments, the environment perception apparatus 106 may be an additionally mounted environment perception apparatus.

In the embodiments of this specification, the display panel 104 may play a role as an input panel receiving a touch operation of a passenger. That is, the display panel 104 further serves as an input apparatus. In addition, the input apparatus may alternatively be a display (for example, a touch panel) disposed separately from the display panel 104 and used for inputting an operation signal; or may be disposed as various switches (a pressing button, a slide switch and the like) for inputting the operation signal. In a specific embodiment, an instruction of opening and closing operation of the rear spoiler may be triggered through the input apparatus.

In the embodiments of this specification, the rear spoiler 105 may further be integrated with a rear spoiler controller 107; the rear spoiler controller 107 may be used for opening and closing (lifting) control of the rear spoiler. In addition, the opening and closing control of the rear spoiler is not limited to be executed by the rear spoiler controller 107 and may alternatively be executed by other controllers, for example, a vehicle controller and the like.

Further, the instrument board 103 may further include a loudspeaker, so that a prompt message and the like are broadcast through the loudspeaker.

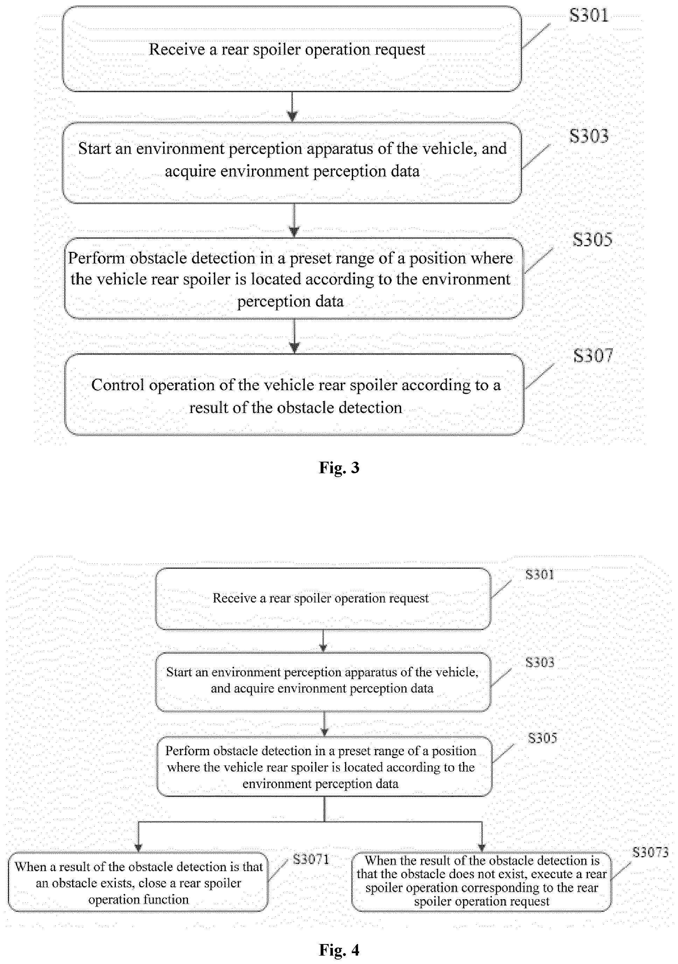

The vehicle rear spoiler control method of this specification will be introduced below. FIG. 3 is a schematic flow chart of a vehicle rear spoiler control method provided by an embodiment of this specification. The specification provides operation steps of the method as described in the embodiments or the flow chart, but may include more or fewer operation steps based on conventional or uncreative labor. The sequence of steps listed in the embodiments is only one of many execution sequences of steps and does not represent the only execution sequence. In actual execution of a system or a vehicle product, the system or the vehicle product may be executed sequentially or in parallel (for example, a parallel processor or multi-threaded processing environment) according to the methods shown in the embodiments or the accompanying drawings. As shown in FIG. 3 specifically, the method may include the following steps:
S301: receiving a rear spoiler operation request.

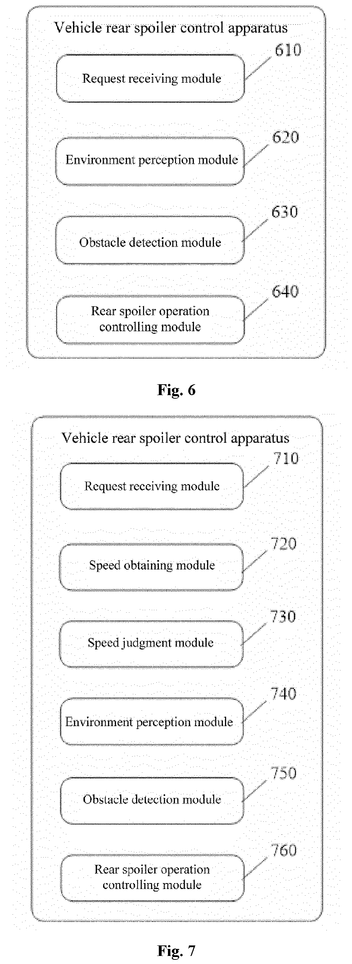

In some embodiments, the step S301 may be executed by a request receiving module 610. Specifically, the request receiving module 610 may refer to the corresponding embodiment of FIG. 6 of this specification.

In actual application, the vehicle may often provide modes of manual and automatic rear spoiler operations which may be achieved by disposing corresponding mode switching key-presses and the like specifically; and correspondingly, a driver or other passengers may make switching in combination with the actual demands.

In the embodiments of this specification, the rear spoiler operation request may include a rear spoiler opening operation request and a rear spoiler closing operation request.

In actual application, in a manual mode, the driver or other passengers may trigger the rear spoiler operation request through the input apparatus (for example, a button and a touch screen) for the rear spoiler manual operation. Specifically, for example, the rear spoiler opening operation request or the rear spoiler closing operation request may be triggered by clicking a designated area of the touch screen.

In a specific embodiment, when the input apparatus is a press type input apparatus (for example, a button), a corresponding rear spoiler operation request may be triggered by a single press. For example, the rear spoiler closing operation request is triggered by pressing once; and then the rear spoiler opening operation request is triggered by pressing once again. Specifically, by monitoring a pressed state of the input apparatus, when the input apparatus is monitored to be pressed, the corresponding rear spoiler operation request may be directly triggered. In addition, the rear spoiler operation request may alternatively be triggered through a continuous pressing mode. For example, with regard to the condition requiring continuous pressing to trigger the rear spoiler operation request, when the input apparatus is detected to be continuously pressed, the rear spoiler operation request is triggered, and the rear spoiler continuously moves; and when pressing is stopped, the rear spoiler stops moving. In other embodiments, for the press type input apparatus, when the input apparatus is monitored to be pressed, a duration of pressing may further be obtained; and when the duration is larger than or equal to a preset time threshold, the corresponding rear spoiler operation request is triggered.

In other embodiments, multiple gears may be provided for lifting and dropping (opening and closing) of the rear spoiler; accordingly, multiple input apparatuses corresponding to different gears may be disposed, and one input apparatus may alternatively be disposed, and different gears are switched according to a pressing time, the number of pressing times and the like. In a specific embodiment, with the situation that the multiple input apparatuses corresponding to different gears are disposed as an example, assuming that four gears P0, P1, P2 and P3 are included, wherein the gear P0 corresponds to a closing state of the rear spoiler; the gears P1, P2 and P3 correspond to different opening gears of the rear spoiler in sequence; and specifically, lifting amplitudes corresponding to different opening gears P1, P2 and P3 of the rear spoiler become larger and larger in sequence. In a certain specific embodiment, when assuming that the input apparatuses corresponding to the four gears P0, P1, P2 and P3 are multiple gear keys P0, P1, P2 and P3 disposed on the touch screen, operations of different gears of the rear spoiler may be triggered by clicking the corresponding gear keys on the touch screen; for example, when the gear P1 requires to be set, the key P1 on the touch screen is clicked directly.

In actual application, in an automatic mode, opening and closing of the rear spoiler may be controlled in combination with a driving mode and a speed of the vehicle. In a specific embodiment, in the closing state of the rear spoiler, when the automatic mode of the rear spoiler is started, and the driving mode is a sport mode, the speed of the vehicle may be monitored; and when it is monitored that the speed of the vehicle is larger than or equal to a first speed threshold, the rear spoiler opening operation request is triggered. In another specific embodiment, in the opening state of the rear spoiler, when the automatic mode of the rear spoiler is started, and the driving mode is the sport mode, the speed of the vehicle may be monitored; and when it is monitored that the speed of the vehicle is smaller than or equal to a second speed threshold, the rear spoiler closing operation request is triggered.

In the embodiments of this specification, the first speed threshold is larger than the second speed threshold. It should be understood that the above first speed threshold and/or second speed threshold may be a setup default, and may alternatively be adjusted by a user as needed. Specifically, specific numerical values of the first speed threshold and the second speed threshold may be set in combination with the driving mode, the performance of the vehicle and the like; for example, the first speed threshold is 120 km/h, and the second speed threshold is 90 km/h; and for another example, the first speed threshold is 110 km/h, and the second speed threshold is 80 km/h.

In other embodiments, multiple gears may be provided for lifting and dropping (opening and closing) of the rear spoiler; and accordingly, multiple speed thresholds corresponding to different gears may be set, so that lifting and dropping of the rear spoiler at different amplitudes are controlled in combination with different speed thresholds.

S303: starting an environment perception apparatus of the vehicle, and acquiring environment perception data.

In some embodiments, the step S303 may be executed by an environment perception module 620. Specifically, the environment perception module 620 may refer to the corresponding embodiment of FIG. 6 of this specification.

In the embodiments of this specification, after the rear spoiler operation request is received, the environment perception apparatus of the vehicle may be started, and environment perception data in the preset range of the position where the vehicle rear spoiler is located is acquired by using the environment perception apparatus.

Specifically, in the embodiments of this specification, the environment perception apparatus is an existing device, for environment perception in the preset range of the position where the rear spoiler is located, of the vehicle. Specifically, the environment perception apparatus may include, but not limited to, at least one of the ultrasonic radar sensor in the vehicle reversing radar system, the camera device in the vehicle reversing image system and the camera device in the vehicle panoramic view system.

In the embodiments of this specification, the preset range of the position where the rear spoiler is located may be a range capable of ensuring safety operation of the rear spoiler (hereinafter referred to as a rear spoiler safety range), and specifically, may be set in combination with the actual conditions. In general, no person and other foreign matters exist in the rear spoiler safety range, and thus the situation that the person or the foreign matters are clamped or collided and the like in the opening and closing process of the rear spoiler may be avoided. In a specific embodiment, the preset range of the position where the rear spoiler is located may be within 1 m behind the rear spoiler and the like. In general, a range of the environment perception data acquired by the environment perception apparatus is larger than the above rear spoiler safety range.

In the embodiments of this specification, environment perception nearby the rear spoiler is conducted by using the existing environment perception apparatus on the vehicle without additionally mounting the environment perception apparatus on the rear spoiler; and thus increase in additional cost is avoided, and the situation that an additional dead weight is brought to the rear spoiler own to cause an opening and closing burden of the rear spoiler is further avoided.

Certainly, in some non claimed embodiments, the environment perception apparatus may alternatively be an additionally mounted environment perception apparatus. Specifically, when the environment perception apparatus is additionally mounted, a proper position may be selected for mounting in combination with the rear spoiler safety range.

S305: performing obstacle detection in the preset range of the position where the vehicle rear spoiler is located according to the environment perception data.

In some embodiments, the step S305 may be executed by an obstacle detection module 630. Specifically, the obstacle detection module 630 may refer to the corresponding embodiment of FIG. 6 of this specification.

In the embodiments of this specification, the environment perception data acquired by the environment perception apparatus may include, but not limited to, image data, distance data and the like.

In a specific embodiment, when the environment perception apparatus is a camera device such as the camera device in the vehicle reversing image system and the camera device in the vehicle panoramic view system, the environment perception data may be the image data; and correspondingly, by recognizing the image data, whether an obstacle exists in the preset range of the position where the rear spoiler is located is detected.

In another specific embodiment, when the environment perception apparatus is an ultrasonic radar sensor such as the ultrasonic radar sensor in the vehicle reversing radar system, the environment perception data may be the distance data; specifically, the distance data may be a distance of the obstacle detected by the ultrasonic radar sensor; and accordingly, whether the distance data exceeds the preset range of the position where the rear spoiler is located may be judged, so that detection on whether the obstacle exists in the preset range of the position where the rear spoiler is located is achieved.

S307: controlling operation of the vehicle rear spoiler according to a result of the obstacle detection.

In some embodiments, the step S307 may be executed by a rear spoiler operation controlling module 640. Specifically, the rear spoiler operation controlling module 640 may refer to the corresponding embodiment of FIG. 6 of this specification.

In the embodiments of this specification, after the obstacle detection is performed, operation of the vehicle rear spoiler may be controlled according to the result of the obstacle detection, which specifically, as shown in combination with FIG. 4, may include the following steps:
S3071: when the result of the obstacle detection is that an obstacle exists, closing a rear spoiler operation function; and
S3073: when the result of the obstacle detection is that the obstacle does not exist, executing a rear spoiler operation corresponding to the rear spoiler operation request.

In the embodiments of this specification, after the rear spoiler operation function is closed, the rear spoiler operation cannot be executed in either automatic mode or manual mode. In a specific embodiment, assuming to be in the manual mode currently, accordingly, the corresponding input apparatus of the manual mode cannot be operated. Accordingly, if in the automatic mode, although the trigger condition of the rear spoiler operation is met, the rear spoiler operation cannot be executed.

In other embodiments, when the result of the obstacle detection is that the obstacle exists, the method may further include: feeding back a prompt message that the obstacle exists, so as to remind a driver or other passengers and improve the user experience.

It can be seen from the technical solutions provided by the embodiments of this specification that, in the embodiments of this specification, after the rear spoiler operation request is received, a corresponding rear spoiler operation is not executed directly, but the environment perception data is acquired by using the environment perception apparatus on the vehicle firstly; based on the environment perception data, the obstacle detection is performed in the preset range of the position where the vehicle rear spoiler is located; then according to the result of the obstacle detection, rear spoiler opening and closing control is conducted, so that the safety problems that the person is clamped, the foreign matters are collided and the like caused by direct opening and closing of the rear spoiler are avoided, and the safety of rear spoiler operation is greatly improved; and obstacle detection is conducted in combination with the existing environment perception device of the vehicle without additionally mounting the environment perception apparatus on the rear spoiler, so that increase in additional cost is avoided, and the situation that an additional dead weight is brought to the rear spoiler own to cause an opening and closing burden of the rear spoiler is further avoided.

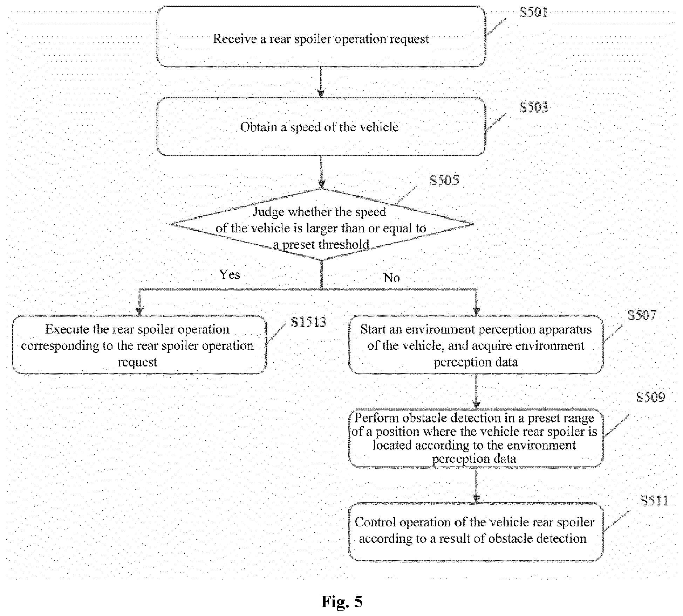

In actual application, when the vehicle is in a high-speed running state, the possibility of person clamping and foreign matter collision is greatly lowered. In order to improve the rear spoiler opening and closing control efficiency, the embodiments of this specification further provide another vehicle rear spoiler control method. FIG. 5 is a schematic flow chart of another vehicle rear spoiler control method provided by an embodiment of the present invention. This specification provides operation steps of the method as described in the embodiments or the flow chart, but may include more or fewer operation steps based on conventional or uncreative labor. The sequence of steps listed in the embodiments is only one of many execution sequences of steps and does not represent the only execution sequence. In actual execution of a system or a vehicle product, the system or the vehicle product may be executed sequentially or in parallel (for example, a parallel processor or multi-threaded processing environment) according to the methods shown in the embodiments or the accompanying drawings. Specifically, as shown in FIG. 5, the method may include:
S501: receiving a rear spoiler operation request.

In some embodiments, the step S501 may be executed by a request receiving module 710. Specifically, the request receiving module 710 may refer to the corresponding embodiment of FIG. 7 of this specification.

S503: obtaining a speed of the vehicle.

In some embodiments, the step S503 may be executed by a speed obtaining module 720. Specifically, the speed obtaining module 720 may refer to the corresponding embodiment of FIG. 7 of this specification.

S505: judging whether the speed of the vehicle is larger than or equal to a preset threshold.

In some embodiments, the step S505 may be executed by a speed judgment module 730. Specifically, the speed judgment module 730 may refer to the corresponding embodiment of FIG. 7 of this specification.

In the embodiments of this specification, the preset threshold may be a speed threshold set in combination with actual application .

S507: if a judging result is no, starting the environment perception apparatus of the vehicle, and acquiring environment perception data.

In some embodiments, the step S507 may be executed by an environment perception module 740. Specifically, the environment perception module 740 may refer to the corresponding embodiment of FIG. 7 of this specification.

In the embodiments of this specification, when the current speed of the vehicle is smaller than the preset threshold, that is, the vehicle itself is in a low-speed running or stationary state (in general, the possibility that the obstacle exists in the preset range of the position where the rear spoiler is located is high when the vehicle itself is in a low-speed running or stationary state), accordingly, the environment perception apparatus of the vehicle may be started, and the environment perception data is acquired to perform the obstacle detection.

S509: performing obstacle detection in the preset range of the position where the vehicle rear spoiler is located according to the environment perception data.

In some embodiments, the step S509 may be executed by an obstacle detection module 750. Specifically, the obstacle detection module 750 may refer to the corresponding embodiment of FIG. 7 of this specification.

S511: controlling operation of the vehicle rear spoiler according to a result of the obstacle detection.

In some embodiments, the step S511 may be executed by a rear spoiler operation controlling module 760. Specifically, the rear spoiler operation controlling module 760 may refer to the corresponding embodiment of FIG. 7 of this specification.

In other embodiments, as shown in FIG. 5, the method may further include:
S513: if the judging result is yes, executing the rear spoiler operation corresponding to the rear spoiler operation request.

In some embodiments, the step S513 may be executed by a rear spoiler operation execution module 770. Specifically, the rear spoiler operation execution module 770 may refer to the corresponding embodiment of FIG. 7 of this specification.

In the embodiments of this specification, when the current speed of the vehicle is larger than or equal to the preset threshold, that is, the vehicle itself is in a high-speed running state (in general, the possibility that the obstacle exists in the preset range of the position where the rear spoiler is located is low when the vehicle itself is in the high-speed running state), accordingly, the rear spoiler operation corresponding to the rear spoiler operation request may be directly executed.

Specific elaboration of the above steps S501, S507-S509 may refer to elaboration of the above relevant steps, which will not be described any more here.

It can be seen from the technical solutions provided by the embodiments of this specification that, in the embodiments of this specification, after the rear spoiler operation request is received, a corresponding rear spoiler operation is not executed directly, but the possibility that the obstacle exists in a current environment is predicted in combination with the speed of the vehicle firstly; when the possibility that the obstacle exists in the current environment is low, the rear spoiler operation corresponding to the rear spoiler operation request is directly conducted; and when the possibility that the obstacle exists in the current environment is high, the environment perception data is acquired by using the environment perception apparatus on the vehicle, so that based on the environment perception data, the obstacle detection is performed in the preset range of the position where the vehicle rear spoiler is located; and then according to the result of the obstacle detection, rear spoiler opening and closing control is conducted. Therefore, the safety problems that the person is clamped, the foreign matters are collided and the like caused by direct opening and closing of the rear spoiler are avoided, and the safety of rear spoiler operation is greatly improved. Also, obstacle detection is conducted in combination with the existing environment perception device of the vehicle without additionally mounting the environment perception apparatus on the rear spoiler, so that increase in additional cost is avoided, and the situation that an additional dead weight is brought to the rear spoiler own to cause an opening and closing burden of the rear spoiler is further avoided. Meanwhile, in combination with pre-judgment of the speed of the vehicle, obstacle detection may further be achieved in combination with a scenario, so that the processing efficiency of rear spoiler control and the flexibility of coping with different scenarios are greatly improved.

The embodiments of this specification further provide a vehicle rear spoiler control apparatus, as shown in FIG. 6, including:
a request receiving module 610 which may be configured to receive a rear spoiler operation request;
an environment perception module 620 which may be configured to start the environment perception apparatus of the vehicle and acquire the environment perception data;
an obstacle detection module 630 which may be configured to perform the obstacle detection in the preset range of the position where the vehicle rear spoiler is located according to the environment perception data; and
a rear spoiler operation controlling module 640 which may be configured to control operation of the vehicle rear spoiler according to a result of the obstacle detection.

In some embodiments, the environment perception apparatus at least includes one of the followings: the ultrasonic radar sensor in the vehicle reversing radar system, the camera device in the vehicle reversing image system and the camera device in the vehicle panoramic view system.

In some embodiments, the rear spoiler operation controlling module includes:
a rear spoiler operation function closing unit configured to, when the result of the obstacle detection is that an obstacle exists, close a rear spoiler operation function; and
a rear spoiler operation execution module configured to, when the result of the obstacle detection is that the obstacle does not exist, execute the rear spoiler operation corresponding to the rear spoiler operation request.

In some embodiments, the apparatus further includes:
a prompt feedback module configured to, when the result of the obstacle detection is that the obstacle exists, feed back a prompt message that the obstacle exists.

The apparatuses in the apparatus embodiments are based on the same inventive concept as the method embodiments.

The embodiment of this specification further provides another vehicle rear spoiler control apparatus. As shown in Fig. 7, the apparatus includes:
a request receiving module 710 which may be configured to receive a rear spoiler operation request;
a speed obtaining module 720 which may be configured to, before the environment perception apparatus of the vehicle is started, obtain a speed of the vehicle;
a speed judging module 730 which may be configured to judge whether the speed of the vehicle is larger than or equal to the preset threshold;
an environment perception module 740 which may be configured to, when the judging result is no, start the environment perception apparatus of the vehicle and acquire the environment perception data;
an obstacle detection module 750 which may be configured to perform the obstacle detection in the preset range of the position where the vehicle rear spoiler is located according to the environment perception data; and
a rear spoiler operation controlling module 760 which may be configured to control operation of the vehicle rear spoiler according to a result of the obstacle detection.

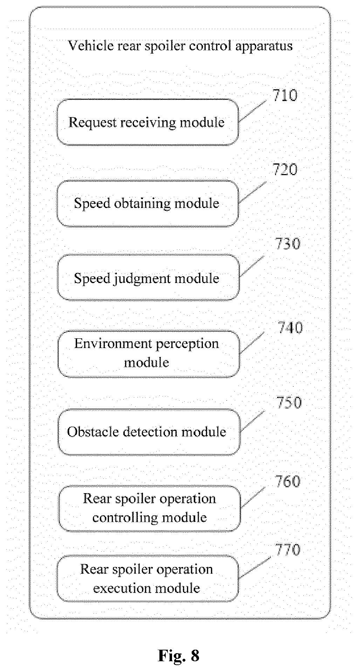

In other embodiments, as shown in FIG. 8, the apparatus may further include:
a rear spoiler operation execution module 770 which may be configured to, if the judging result is yes, execute the rear spoiler operation corresponding to the rear spoiler operation request.

In some embodiments, the rear spoiler operation controlling module includes:
a rear spoiler operation function closing unit configured to, when the result of the obstacle detection is that an obstacle exists, close a rear spoiler operation function; and
a rear spoiler operation execution module configured to, when the result of the obstacle detection is that the obstacle does not exist, execute the rear spoiler operation corresponding to the rear spoiler operation request.

In some embodiments, the apparatus further includes:
a prompt feedback module configured to, when the result of the obstacle detection is that the obstacle exists, feed back a prompt message that the obstacle exists.

The apparatuses in the apparatus embodiments are based on the same inventive concept as the method embodiments.

The embodiments of this specification provide a vehicle rear spoiler control apparatus which may include a processor and a memory. The memory stores at least one instruction or at least one program; and the at least one instruction or the at least one program is loaded and executed by the processor to implement the above vehicle rear spoiler control methods provided by the method embodiments.

The memory may be used for storing software programs and modules, and the processor executes various functional applications and data processing by running the software programs and modules stored in the memory. The memory may mainly include a program storage area and a data storage area, where the program storage area may store an operating system, application programs required by a function, etc.; and the data storage area may store data created on the basis of usage of the device, etc. In addition, the memory may include a high-speed random access memory, and may further include a non-volatile memory such as at least one disk memory apparatus, a flash memory apparatus or other volatile solid state memories. Accordingly, the memory may further include a memory controller to provide the processor with access to the memory.

The embodiments of this specification further provide a storage medium. The storage medium may be disposed in the vehicle to save at least one relevant instruction or at least one relevant program for implementing the vehicle rear spoiler control method in the method embodiments; and the at least one instruction or the at least one program is loaded and executed by the processor to implement the above vehicle rear spoiler control methods provided by the method embodiments.

Optionally, in this embodiment, the storage medium may be located at at least one network server among multiple network servers of a computer network. Optionally, in this embodiment, the storage medium may include, but not limited to, various media that may store program codes such as a U disk, a read-only memory (ROM), a random access memory (RAM), a mobile hard disk, a magnetic disk, or an optical disc, etc.

It can be seen from the embodiments of the vehicle rear spoiler control method and apparatus, the vehicle and the device storage medium provided by this specification that, in this specification, after the rear spoiler operation request is received, a corresponding rear spoiler operation is not executed directly, but the possibility that the obstacle exists in a current environment is predicted in combination with the speed of the vehicle firstly; when the possibility that the obstacle exists in the current environment is low, the rear spoiler operation corresponding to the rear spoiler operation request is directly conducted; and when the possibility that the obstacle exists in the current environment is high, the environment perception data is acquired by using the environment perception apparatus on the vehicle, so that based on the environment perception data, the obstacle detection is performed in the preset range of the position where the vehicle rear spoiler is located; and then according to the result of the obstacle detection, rear spoiler opening and closing control is conducted. Therefore, the safety problems that the person is clamped, the foreign matters are collided and the like caused by direct opening and closing of the rear spoiler are avoided, and the safety of rear spoiler operation is greatly improved. Also, obstacle detection is conducted in combination with the existing environment perception device of the vehicle without additionally mounting the environment perception apparatus on the rear spoiler, so that increase in additional cost is avoided, and the situation that an additional dead weight is brought to the rear spoiler own to cause an opening and closing burden of the rear spoiler is further avoided. Meanwhile, in combination with pre-judgment of the speed of the vehicle, obstacle detection may further be achieved in combination with the scenario, so that the processing efficiency of rear spoiler control and the flexibility of coping with different scenarios are greatly improved.

It should be noted that the above sequence of the embodiments of this specification is only for description, and does not represent the advantages or disadvantages of the embodiments. In addition, specific embodiments of this specification have been described above. Other embodiments are within the scope of the appended claims. In some cases, the actions or steps recited in the claims may be performed in a different order from those in the embodiments and still achieve desired results. In addition, the processes depicted in the accompanying drawings do not necessarily require the particular order or sequential order shown to achieve the desired results. In some implementations, multitask processing and parallel processing are possible or may be advantageous.

Embodiments in the specification are described in a progressive way, same and similar parts among the embodiments can refer to each other, and each embodiment focuses on differences from the other embodiments. In particular, for the apparatus, vehicle, device and storage medium embodiments, which are substantially similar to the method embodiments, the descriptions are relatively simple, and where relevant, reference can be made to partial descriptions of the method embodiments.

## Claims

1. A vehicle rear spoiler control method, comprising:
receiving a rear spoiler operation request (S301, S501), the rear spoiler operation request comprising a rear spoiler opening operation request and/or a rear spoiler closing operation request;
starting an existing environment perception apparatus (106) of the vehicle (100), and acquiring environment perception data (S303) before the rear spoiler is operated to move;
performing obstacle detection in a preset range of a position where the vehicle rear spoiler is located according to the environment perception data (S305, S509); and
controlling operation of the vehicle rear spoiler according to a result of the obstacle detection (S307, S511);
wherein before starting the environment perception apparatus (106) of the vehicle (100), the method further comprises:
obtaining a speed of the vehicle (S503);
judging whether the speed of the vehicle is larger than or equal to a preset threshold (S505); and
if a judging result is no, executing a step of starting the existing environment perception apparatus of the vehicle, and acquiring environment perception data (S507); and
if the judging result is yes, executing a rear spoiler operation corresponding to the rear spoiler operation request (S513).

2. The method according to claim 1, wherein the existing environment perception apparatus (106) at least comprises one of the followings: an ultrasonic radar sensor in a vehicle reversing radar system, a camera device in a vehicle reversing image system and a camera device in a vehicle panoramic view system.

3. The method according to claim 1 or 2, wherein controlling operation of the vehicle rear spoiler according to a result of the obstacle detection (S307, S511) comprises:
when the result of the obstacle detection is that an obstacle exists, closing a rear spoiler operation function (S3071); and
when the result of the obstacle detection is that the obstacle does not exist, executing a rear spoiler operation corresponding to the rear spoiler operation request (S3073).

4. The method according to claim 3, wherein when the result of the obstacle detection is that the obstacle exists, the method further comprises:
feeding back a prompt message that the obstacle exists.

5. A vehicle rear spoiler control apparatus, comprising:
a request receiving module (610, 710) configured to receive a rear spoiler operation request, the rear spoiler operation request comprising a rear spoiler opening operation request and/or a rear spoiler closing operation request;
an environment perception module (620, 740) configured to start an existing environment perception apparatus (106) of the vehicle (100) and acquire environment perception data before the rear spoiler is operated to move;
an obstacle detection module (630, 750) configured to perform obstacle detection in a preset range of a position where the vehicle rear spoiler is located according to the environment perception data; and
a rear spoiler operation controlling module (640, 760) configured to control operation of the vehicle rear spoiler according to a result of the obstacle detection;
wherein the apparatus further comprises:
a speed obtaining module (720) configured to, before the environment perception apparatus of the vehicle is started, obtain a speed of the vehicle;
a speed judging module (730) configured to judge whether the speed of the vehicle is larger than or equal to a preset threshold; and
a rear spoiler operation execution module (770) configured to, if the judging result is yes, execute a rear spoiler operation corresponding to the rear spoiler operation request; and
the environment perception module (620, 740) is further configured to, if a judging result is no, start the existing environment perception apparatus of the vehicle, and acquire the environment perception data.

6. The apparatus according to claim 5, wherein the existing environment perception apparatus (106) at least comprises one of the followings: an ultrasonic radar sensor in a vehicle reversing radar system, a camera device in a vehicle reversing image system and a camera device in a vehicle panoramic view system.

7. The apparatus according to claim 5 or 6, wherein the rear spoiler operation controlling module (640, 760) comprises:
a rear spoiler operation function closing unit configured to, when the result of the obstacle detection is that an obstacle exists, close a rear spoiler operation function; and
the rear spoiler operation execution module (770) is further configured to, when the result of the obstacle detection is that the obstacle does not exist, execute a rear spoiler operation corresponding to the rear spoiler operation request.

8. The apparatus according to claim 7, wherein the apparatus further comprises:
a prompt feedback module configured to, when the result of the obstacle detection is that the obstacle exists, feed back a prompt message that the obstacle exists.

9. A vehicle, comprising: an environment perception apparatus, a vehicle rear spoiler and a controller, wherein
the environment perception apparatus is configured to acquire the environment perception data for obstacle detection in the preset range of the position where the vehicle rear spoiler is located; and
the controller is configured to control the vehicle rear spoiler based on the method according to any one of claims 1 to 4.

10. A vehicle rear spoiler control apparatus, comprising: a processor and a memory, wherein the memory stores at least one instruction or at least one program; and the at least one instruction or the at least one program is loaded and executed by the processor to implement the vehicle rear spoiler control method according to any one of claims 1 to 4.

## Patentansprüche

1. Fahrzeugheckspoiler-Steuerungsverfahren, umfassend:
Empfangen einer Heckspoilerbetrieb-Anforderung (S301, S501), wobei die Heckspoilerbetrieb-Anforderung eine Heckspoileröffnungsbetrieb-Anforderung und/oder eine Heckspoilerschließbetrieb-Anforderung umfasst;
Starten einer vorhandenen Umgebungswahrnehmungsvorrichtung (106) des Fahrzeugs (100) und Beziehen von Umgebungswahrnehmungsdaten (S303), bevor der Heckspoiler dazu betrieben wird, sich zu bewegen;
Durchführen einer Hinderniserkennung in einem voreingestellten Bereich um eine Position, an der sich der Fahrzeugheckspoiler befindet, anhand der Umgebungswahrnehmungsdaten (S305, S509); und
Steuern eines Betriebs des Fahrzeugheckspoilers entsprechend einem Ergebnis der Hinderniserkennung (S307, S511);
wobei das Verfahren vor dem Starten der Umgebungswahrnehmungsvorrichtung (106) des Fahrzeugs (100) ferner umfasst:
Erlangen einer Geschwindigkeit des Fahrzeugs (S503);
Beurteilen, ob die Geschwindigkeit des Fahrzeugs größer als oder gleich einem voreingestellten Schwellenwert ist (S505); und,
wenn das Beurteilungsergebnis nein lautet, Ausführen eines Schritts des Startens der vorhandenen Umgebungswahrnehmungsvorrichtung des Fahrzeugs und Beziehen von Umgebungswahrnehmungsdaten (S507); und,
wenn das Beurteilungsergebnis ja lautet, Ausführen eines Heckspoilerbetriebs entsprechend der Heckspoilerbetrieb-Anforderung (S513).

2. Verfahren nach Anspruch 1, wobei die vorhandene Umgebungswahrnehmungsvorrichtung (106) aufweist: einen Ultraschallradarsensor in einem Fahrzeugrückfahr-Radarsystem, eine Kameraeinrichtung in einem Fahrzeugrückfahr-Bildsystem und/oder eine Kameraeinrichtung in einem Fahrzeugpanoramaansichtssystem.

3. Verfahren nach Anspruch 1 oder 2, wobei das Steuern des Betriebs des Fahrzeugheckspoilers entsprechend dem Ergebnis der Hinderniserkennung (S307, S511) umfasst:
wenn das Ergebnis der Hinderniserkennung lautet, dass ein Hindernis vorhanden ist, Schließen einer Heckspoilerbetriebsfunktion (S3071); und,
wenn das Ergebnis der Hinderniserkennung lautet, dass kein Hindernis vorhanden ist, Ausführen eines Heckspoilerbetriebs entsprechend der Heckspoilerbetrieb-Anforderung (S3073).

4. Verfahren nach Anspruch 3, wobei das Verfahren, wenn das Ergebnis der Hinderniserkennung lautet, dass ein Hindernis vorhanden ist, ferner umfasst:
Zurückgeben einer Hinweismeldung, dass das Hindernis vorhanden ist.

5. Fahrzeugheckspoiler-Steuerungsvorrichtung, aufweisend:
ein Anforderungsempfangsmodul (610, 710), das dazu eingerichtet ist, eine Heckspoilerbetrieb-Anforderung zu empfangen, wobei die Heckspoilerbetrieb-Anforderung eine Heckspoileröffnungsbetrieb-Anforderung und/oder eine Heckspoilerschließbetrieb-Anforderung umfasst;
ein Umgebungswahrnehmungsmodul (620, 740), das dazu eingerichtet ist, eine bestehende Umgebungswahrnehmungsvorrichtung (106) des Fahrzeugs (100) zu starten und Umgebungswahrnehmungsdaten zu beziehen, bevor der Heckspoiler dazu betrieben wird, sich zu bewegen;
ein Hinderniserkennungsmodul (630, 750), das dazu eingerichtet ist, anhand der Umgebungswahrnehmungsdaten eine Hinderniserkennung in einem voreingestellten Bereich um eine Position durchzuführen, an der sich der Fahrzeugheckspoiler befindet; und
ein Heckspoilerbetrieb-Steuerungsmodul (640, 760), das dazu eingerichtet ist, einen Betrieb des Fahrzeugheckspoilers entsprechend einem Ergebnis der Hinderniserkennung zu steuern;
wobei die Vorrichtung ferner aufweist:
ein Geschwindigkeitserlangungsmodul (720), das dazu eingerichtet ist, eine Geschwindigkeit des Fahrzeugs zu erlangen, bevor die Umgebungswahrnehmungsvorrichtung des Fahrzeugs gestartet wird;
ein Geschwindigkeitsbeurteilungsmodul (730), das dazu eingerichtet ist, zu beurteilen, ob die Geschwindigkeit des Fahrzeugs größer als oder gleich einem voreingestellten Schwellenwert ist; und
ein Heckspoilerbetrieb-Ausführungsmodul (770), das dazu eingerichtet ist, wenn das Beurteilungsergebnis ja lautet, einen Heckspoilerbetrieb auszuführen, der der Heckspoilerbetrieb-Anforderung entspricht; wobei
das Umgebungswahrnehmungsmodul (620, 740) ferner dazu eingerichtet ist, wenn ein Beurteilungsergebnis nein lautet, die bestehende Umgebungswahrnehmungsvorrichtung des Fahrzeugs zu starten und die Umgebungswahrnehmungsdaten zu beziehen.

6. Vorrichtung nach Anspruch 5, wobei die bestehende
Umgebungswahrnehmungsvorrichtung (106) aufweist: einen Ultraschallradarsensor in einem Fahrzeugrückfahr-Radarsystem, eine Kameraeinrichtung in einem Fahrzeugrückfahr-Bildsystem und/oder eine Kameraeinrichtung in einem Fahrzeugpanoramaansichtssystem.

7. Vorrichtung nach Anspruch 5 oder 6, wobei das Heckspoilerbetrieb-Steuerungsmodul (640, 760) aufweist:
eine Heckspoilerbetriebsfunktion-Schließeinheit, die dazu eingerichtet ist, wenn das Ergebnis der Hinderniserkennung lautet, dass ein Hindernis vorhanden ist, eine Heckspoilerbetriebsfunktion zu schließen; und
das Heckspoilerbetrieb-Ausführungsmodul (770) ferner dazu eingerichtet ist, wenn das Ergebnis der Hinderniserkennung lautet, dass kein Hindernis vorhanden ist, einen Heckspoilerbetrieb auszuführen, der der Heckspoilerbetrieb-Anforderung entspricht.

8. Vorrichtung nach Anspruch 7, wobei die Vorrichtung ferner aufweist:
ein Hinweis-Rückgabemodul, das dazu eingerichtet ist, eine Hinweismeldung, dass ein Hindernis vorhanden ist, zurückzugeben, wenn das Ergebnis der Hinderniserkennung lautet, dass ein Hindernis vorhanden ist.

9. Fahrzeug, aufweisend: eine Umgebungswahrnehmungsvorrichtung, einen Fahrzeugheckspoiler und eine Steuereinheit, wobei
die Umgebungswahrnehmungsvorrichtung dazu eingerichtet ist, die Umgebungswahrnehmungsdaten zur Hinderniserkennung in dem voreingestellten Bereich um die Position zu beziehen, an der sich der Fahrzeugheckspoiler befindet; und
die Steuereinheit dazu eingerichtet ist, den Fahrzeugheckspoiler gemäß dem Verfahren nach einem der Ansprüche 1 bis 4 zu steuern.

10. Fahrzeugheckspoiler-Steuerungsvorrichtung, aufweisend: einen Prozessor und einen Speicher, wobei in dem Speicher mindestens eine Anweisung oder mindestens ein Programm gespeichert ist; und die mindestens eine Anweisung oder das mindestens eine Programm von dem Prozessor geladen und ausgeführt wird, um das Fahrzeugheckspoiler-Steuerungsverfahren nach einem der Ansprüche 1 bis 4 zu implementieren.

## Revendications

1. Un procédé de commande d'aileron arrière de véhicule, consistant à:
recevoir une demande d'actionnement de l'aileron arrière (S301, S501), la demande d'actionnement de l'aileron arrière comprenant une demande d'actionnement d'ouverture de l'aileron arrière et/ou une demande d'actionnement de fermeture de l'aileron arrière;
démarrer un appareil de perception d'environnement existant (106) du véhicule (100), et acquérir des données de perception d'environnement (S303) avant que l'aileron arrière soit actionné pour se déplacer;
effectuer une détection d'obstacles dans une plage prédéfinie d'une position où se trouve l'aileron arrière du véhicule en fonction les données de perception d'environnement (S305, S509); et
commander l'actionnement de l'aileron arrière du véhicule en fonction d'un résultat de la détection d'obstacles (S307, S511);
dans lequel avant de démarrer l'appareil de perception d'environnement (106) du véhicule (100), le procédé consiste en outre à:
obtenir une vitesse du véhicule (S503);
déterminer si la vitesse du véhicule est supérieure ou égale à un seuil prédéfini (S505); et
si un résultat obtenu est non, réaliser une étape de démarrage de l'appareil de perception d'environnement existant du véhicule, et acquérir des données de perception d'environnement (S507); et
si le résultat obtenu est oui, réaliser un actionnement de l'aileron arrière correspondant à la demande d'actionnement de l'aileron arrière (S513).

2. Le procédé selon la revendication 1, dans lequel l'appareil de perception d'environnement existant (106) comprend au moins un des éléments suivants: un capteur radar à ultrasons dans un système de radar de recul de véhicule, un dispositif de caméra dans un système d'image de recul de véhicule et un dispositif de caméra dans un système de vue panoramique de véhicule.

3. Le procédé selon la revendication 1 ou 2, dans lequel la commande d'actionnement de l'aileron arrière du véhicule en fonction d'un résultat de la détection d'obstacles (S307, S511) comprend:
lorsque le résultat de la détection d'obstacles définit qu'un obstacle existe, fermer une fonction d'actionnement de l'aileron arrière (S3071); et
lorsque le résultat de la détection d'obstacle définit que l'obstacle n'existe pas, réaliser un actionnement de l'aileron arrière correspondant à la demande d'actionnement de l'aileron arrière (S3073).

4. Le procédé selon la revendication 3, dans lequel, lorsque le résultat de la détection d'obstacle définit que l'obstacle existe, le procédé consiste en outre à:
renvoyer un message rapide indiquant que l'obstacle existe.

5. Un appareil de commande d'aileron arrière de véhicule, comprenant:
un module de réception de demande (610, 710) configuré de manière à recevoir une demande d'actionnement de l'aileron arrière, la demande d'actionnement de l'aileron arrière comprenant une demande d'actionnement d'ouverture de l'aileron arrière et/ou une demande d'actionnement de fermeture de l'aileron arrière;
un module de perception d'environnement (620, 740) configuré de manière à démarrer un appareil de perception d'environnement existant (106) du véhicule (100) et acquérir des données de perception d'environnement avant que l'aileron arrière soit actionné pour se déplacer;
un module de détection d'obstacles (630, 750) configuré de manière à effectuer une détection d'obstacles dans une plage prédéfinie d'une position où se trouve l'aileron arrière du véhicule en fonction des données de perception d'environnement; et
un module de commande d'actionnement de l'aileron arrière (640, 760) configuré de manière à commander un actionnement de l'aileron arrière du véhicule en fonction du résultat de la détection d'obstacles;
dans lequel l'appareil comprend en outre:
un module d'obtention de vitesse (720) configuré de manière à, avant le démarrage de l'appareil de perception d'environnement du véhicule, obtenir une vitesse du véhicule;
un module d'évaluation de vitesse (730) configuré de manière à déterminer si la vitesse du véhicule est supérieure ou égale à un seuil prédéfini; et
un module d'exécution d'actionnement de l'aileron arrière (770) configuré de manière à, si le résultat obtenu est oui, exécuter un actionnement de l'aileron arrière correspondant à la demande d'actionnement de l'aileron arrière; et
le module de perception d'environnement (620, 740) est en outre configuré de manière à, si un résultat obtenu est non, démarrer l'appareil de perception d'environnement existant du véhicule, et acquérir les données de perception d'environnement.

6. L'appareil selon la revendication 5, dans lequel l'appareil de perception d'environnement existant (106) comprend au moins un des éléments suivants: un capteur radar à ultrasons dans un système de radar de recul de véhicule, un dispositif de caméra dans un système d'image de recul de véhicule et un dispositif de caméra dans un système de vue panoramique de véhicule.

7. L'appareil selon la revendication 5 ou 6, dans lequel le module de commande d'actionnement de l'aileron arrière (640, 760) comprend:
une unité de fermeture de fonction d'actionnement de l'aileron arrière configurée de manière à, lorsque le résultat de la détection d'obstacles définit qu'un obstacle existe, fermer une fonction d'actionnement de l'aileron arrière; et
le module d'exécution d'actionnement de l'aileron arrière (770) est en outre configuré de manière à, lorsque le résultat de la détection d'obstacle définit que l'obstacle n'existe pas, exécuter un actionnement de l'aileron arrière correspondant à la demande d'actionnement de l'aileron arrière.

8. L'appareil selon la revendication 7, dans lequel l'appareil comprend en outre:
un module de retour d'informations configuré de manière à, lorsque le résultat de la détection d'obstacle définit que l'obstacle existe, renvoyer un message rapide indiquant que l'obstacle existe.

9. Un véhicule comprenant: un appareil de perception d'environnement, un aileron arrière de véhicule et un contrôleur, dans lequel
l'appareil de perception d'environnement est configuré de manière à acquérir les données de perception d'environnement pour une détection d'obstacles dans la plage prédéfinie de la position où se trouve l'aileron arrière du véhicule; et
le contrôleur est configuré de manière à commander l'aileron arrière du véhicule sur la base du procédé selon l'une quelconque des revendications 1 à 4.

10. Un appareil de commande d'aileron arrière de véhicule, comprenant: un processeur et une mémoire, dans lequel la mémoire stocke au moins une instruction ou au moins un programme; et la ou les instructions ou le ou les programmes sont chargés et exécutés par le processeur pour mettre en oeuvre le procédé de commande d'aileron arrière d'un véhicule selon l'une quelconque des revendications 1 à 4.
